# EUROPEAN PATENT APPLICATION

(11) **EP 4 744 873 A1**
(43) Date of publication of application: **20.05.2026**
(21) Application number: 24306915.0
(22) Date of filing: 15.11.2024
(51) Int. Cl.: B29D 11/00, B29C 64/112, B29C 64/393

(54) **METHOD FOR ADDITIVELY MANUFACTURING AN OPHTHALMIC DEVICE AND MANUFACTURING SYSTEM CONFIGURED TO CARRY OUT SUCH A METHOD**

(71) Applicant: Essilor International, 94220 Charenton-Le-Pont (FR)
(72) Inventor: BEN CHEIKH, Ilhem, 94000 CRETEIL (FR); HUPREL, Laurent, 94140 ALFORTVILLE (FR); CASTRO MARTINEZ, Luis Ricardo, 94100 SAINT MAUR DES FOSSES (FR)
(74) Representative: Santarelli

(57) **Abstract**

The disclosure provides a method for additively manufacturing an ophthalmic device thanks to at least one inkjet print head (6) having a plurality of nozzles (15), comprising providing a manufacturing file comprising parameters including a plurality of images, each image being representative of distribution of voxels or droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window.

## Description

### FIELD OF THE DISCLOSURE

The disclosure relates to a method for additively manufacturing an ophthalmic device and a manufacturing system configured to carry out such a method.

The disclosure also relates to a command and control unit including system elements configured to run a computer program in order to implement at least some steps of the additive manufacturing method, and to a manufacturing system comprising such a command and control unit and configured for carrying out such a method.

The disclosure also relates to a computer program including instructions configured to implement such an additive manufacturing method, when said computer program is run by a computer, and to a client-server communication interface for transferring to a remote computer at least manufacturing data which are determined by a computer program that implements some steps of the additive manufacturing method, when said computer program is run in a command and control unit, the remote computer implementing the other steps of such method.

### BACKGROUND ART

It is known to use an additive manufacturing technology to manufacture an ophthalmic device, such as spectacle lenses.

Known methods for additively manufacturing of ophthalmic lenses, such as stereolithography and its variants, comprise curing steps and layering steps which are performed successively in a manufacturing system which comprises a curing device, a layering device and a building platform located in relation to a vat filled with a predetermined material.

For instance, each ophthalmic lens is built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a new liquid layer on the previous hardened layer of the plurality of ophthalmic lenses to be manufactured.

Another method of additive manufacturing may comprise successively depositing droplets of liquid material and curing them in order to form layers of material. This method, usually called 3D-printing, or inkjet printing, generally controls the shape of the layers by controlling the position and volume of the deposited droplets whereas the curing step is usually global.

Other additive manufacturing methods may also be used.

In the above methods, a plurality of layers is formed and some unwanted features called ripples and/or banding or lining effects can be formed in layers.

There is thus a need to provide a method for additively manufacturing an ophthalmic device, by inkjet-printing and with limited such unwanted features.

International application WO 2020/169690 discloses a method for printing a three-dimensional optical component, wherein the three-dimensional component is built up from layers of printing ink which are printed at least partially one above the other in consecutive layer-printing steps, such that during at least one layer-printing step a layer is printed in multipass mode, wherein the multi-pass layer is divided into multiple sublayers which are printed in consecutive sublayer-printing steps such that during each sublayer-printing step only part of the multi-pass layer is printed and the full multi-pass layer is obtained through the multiple sublayer-printing steps.

International application WO 2020/169690 states that such a multi-pass printing method may prevent undesirable printing artefacts as those caused by differing jetting distances through division of a single layer in multiple sublayers that only cover part of the original, single layer.

International application WO 2018/055006 also discloses a method for printing a three-dimensional optical component, by depositing droplets of printing ink side by side and one above the other in several consecutive depositing steps by means of a print head, wherein in each depositing step a plurality of droplets is ejected simultaneously by a plurality of ejection nozzles of the print head, wherein the print head is moved relative to the deposited droplets in a moving step performed between at least two consecutive depositing steps in such a manner that the droplets deposited in the same position in the at least two consecutive depositing steps are ejected at least partly from two different ejection nozzles.

International application WO 2018/055006 states that such a moving step in the above method prevents inequalities and non-uniformities arising from deviations in the ejecting characteristics between different ejection nozzles.

### SUMMARY OF THE DISCLOSURE

The disclosure is directed to a method for additively manufacturing an ophthalmic device, for instance by inkjet-printing, which is simple and convenient to carry out.

The disclosure accordingly provides a method for additively manufacturing an ophthalmic device thanks to at least one inkjet print head having a plurality of nozzles, comprising a step of providing a manufacturing file comprising parameters including a plurality of images, each image being representative of a distribution of voxels or a distribution of droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics at least of the nozzles of the at least one inkjet print head.

In particular, the selected nozzles are representative of a group of adjacent nozzles located in an inkjet printing window.

Thanks to the method according to the disclosure, it is possible to control accurately the inkjet printing depending on a status of performance of the nozzles of the at least one inkjet print head, including the selected nozzles and the no-selected nozzles.

Indeed, the determined deviation characteristics of the nozzles are representative of the accuracy of the nozzles to eject droplets at targeted locations, so that the selection of the nozzles is made by taking into account accuracy of both selected nozzles themselves and no-selected nozzles in a group of nozzles.

The deviation characteristics of the nozzles can be representative of a geometrical deviation, that is to say a difference between an actual location where each nozzle ejects a voxel or a drop of material during printing compared to a theoretical location; and/or representative of a volume deviation, that is to say a difference between an actual volume of an ejected voxel or drop of material during printing compared to a theoretical volume.

In other words, based on such determined deviation characteristics of the nozzles, the layers of the ophthalmic device can be inkjet printed by taking into account a quality of ejection of the nozzles of the at least one inkjet print head.

It is to be noted that the inventors found that clogging and declogging of the nozzles of the at least one inkjet print head, which can generate dispersion of the droplets and thus inaccuracy, do not vary substantially during inkjet printing, so that the selection of the nozzles as proposed in the present method can be performed before and/or during inkjet printing.

Therefore, the method according to the disclosure may allow to provide, thanks to the technology of 3D-inkjet printing, an ophthalmic device having a determined geometry and with no visible printing lines and surface waviness or with reduced printing lines and surface waviness which are not detrimental for the quality of the ophthalmic device.

The manufacturing file may include geometrical characteristics of a sliced ophthalmic device which are representative of the layers to be built.

A slice may comprise one or several images, each representative of the voxel distribution or of the droplets distribution to be ejected by the selected nozzles.

Advantageous and convenient features of the manufacturing method are described below.

The method may comprise a step of generating the manufacturing file.

The method may comprise a step of inkjet printing the layers of the ophthalmic device based on the provided and/or generated manufacturing file.

The manufacturing file may comprise further parameters including curing characteristics.

The method may comprise a step of curing at least partially the layers of the ophthalmic device based on the provided manufacturing file.

The inkjet printing of the layers and the curing of the layers may be performed at least partially alternatively and/or successively.

The layers may comprise several sub-layers of similar or different thicknesses.

The sub-layers may be at least partially juxtaposed and/or at least partially superimposed.

The sub-layers may be inkjet printed at least partially simultaneously thanks to different selected nozzles and/or at least partially successively one to each other thanks to similar or different selected nozzles.

The step of inkjet printing the layers and/or sub-layers may be performed with print properties which can be fixed or variable during inkjet printing.

The print properties may comprise an ink material and/or a drop density and/or a drop volume and/or a drop viscosity and/or a drop speed ejection.

The print properties may also comprise a print head resolution corresponding to a radial resolution of the print head which is defined at least as a function of the number and the arrangement of the nozzles.

The manufacturing file may comprise parameters further including positioning data of the ophthalmic device and/or of the at least one inkjet print head, which are determined depending on the selected nozzles.

The method may comprise a step of positioning the ophthalmic device and/or the at least one inkjet print head based on the manufacturing file.

The method may comprise steps of providing deviation characteristics data of the nozzles of the at least one inkjet print head, determining for each of at least some images at least one inkjet printing window representative at least of a size of the image, and selecting the group of adjacent nozzles to be used for inkjet printing each of said at least some images as a function of the deviation characteristics data and of the at least one determined inkjet printing window.

The group of adjacent nozzles to be used for inkjet printing each of said at least some images may be selected also as a function of a quality parameter defined by at least one of a maximum deviation value for a nozzle, a maximum mean deviation value between some nozzles in a group of nozzles, and a standard deviation value.

The method may comprise a step of determining deviation characteristics data of the nozzles of the at least one inkjet print head by inkjet printing layers according to a predetermined pattern on a calibration blank, by measuring the printed pattern on the calibration blank and by comparing the measured printed pattern to the predetermined pattern.

The predetermined pattern has a shape allowing to highlight one of a deviation direction rather than another deviation direction.

The method may comprise a step of generating and/or providing at least one accuracy map representative of the deviation characteristics of the nozzles of the at least one inkjet print head, as a function of the determined deviation characteristics data and of locations of the nozzles on the inkjet print head.

The method may comprise a step of determining at least one operating zone on the generated accuracy map corresponding to the selected nozzles of the at least one inkjet print head, thanks to the at least one inkjet printing window.

The at least one operating zone may be determined as a function of the size of the image and the deviation characteristics data of the nozzles on the at least one operating zone.

Depending on the size of the image and/or on the deviation characteristics data of the nozzles, one or several inkjet printing windows can be determined for the image and are placed on several operating zones of the generated accuracy map which are distinct, or which are similar, or which overlap.

In an embodiment, the size of the image and thus the inkjet printing window are configured so that a single operating zone on the generated accuracy map is determined.

In another embodiment, the size of the image and thus the inkjet printing window are configured so that several operating zones on the generated accuracy map is determined.

The operating zones which are determined can at least partially overlap and the overlap may be at least equal to a print head resolution corresponding to a radial resolution of the at least one inkjet print head which is defined at least as a function of the number and the arrangement of the nozzles.

It is to be noted that the at least one operating zone on the generated accuracy map corresponding to the selected nozzles of the at least one inkjet print head to be used for inkjet printing the layer of the ophthalmic device is determined so that to have minimum values of deviation and thus the most accurate inkjet printing, in view of the status of the inkjet print head.

In this respect, determining the at least one operating zone can be made iteratively on several zones of the accuracy map.

The disclosure also provides, according to a second aspect, a command and control unit including system elements configured to run a computer program in order to additively manufacture an ophthalmic device thanks to at least one inkjet print head having a plurality of nozzles, by implementing step of providing a manufacturing file comprising parameters including a plurality of images, each image being representative of a distribution of voxels and/or droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window.

The disclosure further provides, according to a third aspect, a manufacturing system comprising an inkjet printer comprising at least one inkjet print head having a plurality of nozzles and a command and control unit, the system being configured for additively manufacturing an ophthalmic device, by providing to the inkjet printer a manufacturing file comprising parameters including a plurality of images, each image being representative of a distribution of voxels and/or droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window.

The disclosure also provides, according to a fourth aspect, a computer program including instructions configured to additively manufacture an ophthalmic device thanks to at least one inkjet print head having a plurality of nozzles, by implementing step of determining a manufacturing file comprising parameters including a plurality of images, each image being representative of a distribution of voxels and/or droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window, when said computer program is run by a computer.

The disclosure further provides, according to a fifth aspect, a client-server communication interface for transferring to a remote computer at least a manufacturing file for additively manufacturing an ophthalmic device, the manufacturing file being determined by a computer program when said computer program is run in a command and control unit, and the manufacturing file comprising parameters including a plurality of images, each image being representative of a distribution of voxels and/or droplets for inkjet printing at least partially a layer of the ophthalmic device and each image being used for activating and deactivating nozzles of at least one inkjet print head of an inkjet printer, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window, the remote computer being configured to implement the manufacturing file by inkjet printing the layers of the ophthalmic device.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for additively manufacturing ophthalmic devices.
Figure 2 diagrammatically shows a client-server communication interface comprising system parts configured for transferring at least one manufacturing file determined by the method according to the disclosure to a remote data processing system.
Figure 3 shows another view of the manufacturing system illustrated in Figure 1.
Figure 4 is a schematic view showing some steps for additively manufacturing ophthalmic devices thanks to an inkjet printer of the manufacturing system.
Figure 5 is a block diagram showing steps of the method for additively manufacturing an ophthalmic device according to the disclosure.
Figure 6 is a block diagram showing further steps of the method.
Figure 7 represents geometrical deviation data of nozzles of inkjet print heads of the inkjet printer.
Figure 8 represents an accuracy map representative of the deviation characteristics of the nozzles of the inkjet print heads and a detail of the accuracy map.
Figure 9 represents an inkjet printing window representative of a size of an image corresponding to a layer of an ophthalmic device to be manufactured.
Figures 10 and 11 illustrate determining at least an operating zone on the accuracy map thanks to inkjet printing windows.

### DETAILED DESCRIPTION OF EXAMPLE EMBODIMENTS

The disclosure is directed to a method and a manufacturing system for additively manufacturing by inkjet printing an ophthalmic device.

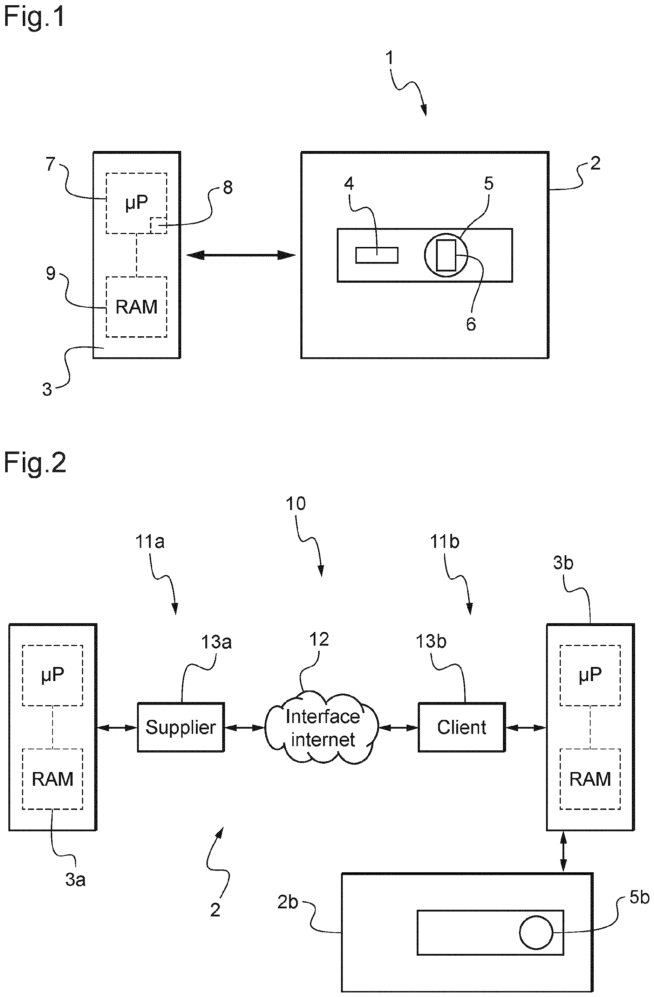

Figure 1 illustrates schematically a manufacturing system 1 configured to carry out a method for additively manufacturing ophthalmic devices 5, such as for instance spectacle lenses.

The ophthalmic device has for instance a predetermined optical function and is made from at least one predetermined material.

The manufacturing system 1 comprises an additive unit also called additive manufacturing module, which is here formed by an inkjet printer 2 configured for projecting volumes of the predetermined material in the shape of droplets.

The predetermined material is suitable for manufacturing ophthalmic devices 2, such as a liquid resin for making eyeglasses.

The manufacturing system 1 further comprises system parts generally formed by at least one command and control unit 3 configured to communicate with a data processing system (or control unit) of the inkjet printer 2 and configured to run a computer program having instructions configured to implement at least some steps of the method, when said computer program is run by a computer.

The inkjet printer 2 comprises one or a plurality of inkjet print heads 6 configured to project the predetermined material in jets of droplets and at least one curing device 4 including for instance an irradiation source configured for curing the droplets of material previously projected.

The inkjet print heads 6 may comprise a plurality of nozzles located in a determined arrangement, for instance along a predetermined length and a predetermined width, so that to define one or a plurality of groups of adjacent nozzles.

The inkjet printer 2 may comprise a data processing system or a control unit (not shown) configured for controlling at least the inkjet print heads 6 and the curing device 4.

The command and control unit 3 comprises a microprocessor 7 having a memory 8, in particular a non-volatile memory, allowing it to load and store the computer program, also called software, which when it is executed in the microprocessor 7, allows the implementation of the method according to the disclosure and thus the use of the inkjet printer 2.

This non-volatile memory 8 is for example of the ROM ("read only memory") type.

The command and control unit 3 further comprises a memory 9, in particular a volatile memory, allowing data to be stored during the execution of the software and the implementation of the method.

This volatile memory 9 is for example of the RAM or EEPROM type (respectively "random access memory" and "electrically erasable programmable read only memory").

The command and control unit 3 may be only at least partially integrated into the inkjet printer 2. In other words, the command and control unit 3 may be arranged in part, or in whole, outside the inkjet printer 2. In particular, the command and control unit 3 may comprise one or a plurality of command and control modules located inside and/or outside the inkjet printer 2.

The inkjet printer 2 is here configured at least for inkjet printing the ophthalmic device 5 layer by layer, each layer being formed by a volume of the predetermined material, and for curing the volumes of material in order to polymerize and harden the layers and thus to form the ophthalmic device 5.

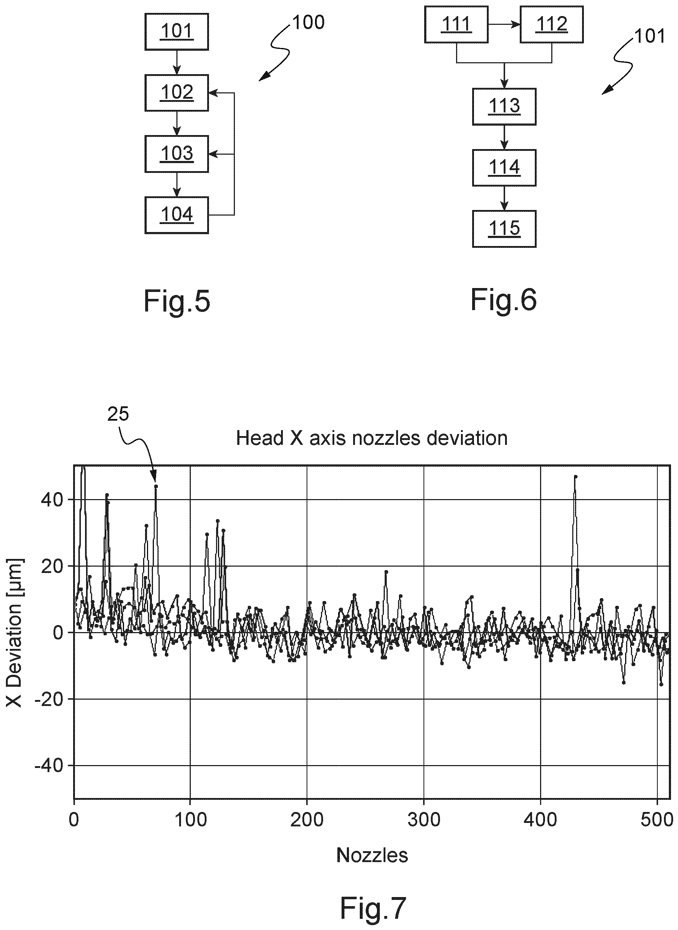

In this respect, the command and control unit 3 is also configured to command and control at least some of steps of an additive manufacturing method described below at least in reference to Figures 5 and 6.

Figure 2 shows a client-server communication interface 10 comprising for instance a so-called supplier-side 11a and another, so-called client-side 11b, and these two sides communicating via for instance an internet interface 12.

The supplier-side 11a comprises a supplier server 13a linked to a data processing system or a command and control unit 3a of the same type as that in Figure 1, this server 13a being configured to communicate with the internet interface 12.

The client-side 11b also comprises a client server 13b which is configured to communicate with the internet interface 12, and which is linked to a data processing system or a command and control unit 3b of the same type as that of the supplier-side .

In addition, the command and control unit 3b on the client-side 11b is linked to an inkjet printer 2b of the same type as that in Figure 1, and is configured to additively manufacture an ophthalmic device.

For instance, the command and control unit 3a on the client-side 11b is configured for receiving some parameters about the ophthalmic device to be additively manufactured and about the inkjet print heads to be used for additively manufacture the ophthalmic device.

For instance, the parameters about the ophthalmic device may include geometrical characteristics and/or optical function, which may include a 3D file representative of the ophthalmic device (such as CAD files, STL files or other) and/or images representative of a distribution of material, including a distribution of voxels or a distribution of droplets, for inkjet printing one or more layers, and/or other ophthalmic properties of an ophthalmic surface of the ophthalmic device 5b intended to be manufactured, and/or at least one information representative of intrinsic parameter of a material of the ophthalmic device.

For instance, the parameters about the inkjet print heads include information representative of the status of each print head, such as a number of nozzles, and/or a geometrical arrangement of the nozzles, and/or deviation characteristics of the nozzles which can be representative of a geometrical deviation of the ejected material, that is to say a difference between an actual location where each nozzle ejects a voxel or a drop of material during printing compared to a theoretical location, and/or representative of a volume deviation of the ejected material, that is to say a difference between an actual volume of an ejected voxel or drop of material during printing compared to a theoretical volume.

In this respect, the command and control unit 3b on the client-side 11b, using the internet interface 12 and both client server 13b and supplier server 13a, sends the data received by the command and control unit 3b on the client-side 11b, to the command and control unit 3a on the supplier-side 11a for the determination of a manufacturing file representative of operational parameters, including a group of selected adjacent nozzles to be used, for inkjet printing each layer of the ophthalmic device.

The command and control unit 3a on the supplier-side 11a executes the computer program that it contains in order to determine the manufacturing file.

Using the supplier server 13a and the internet interface 12, the command and control unit 3a on the supplier-side 11a sends the manufacturing file to the command and control unit 3b on the client-side 11b.

The command and control unit 3b on the client-side 11b is here configured to execute software for implementing the other steps of the manufacturing method for manufacturing by inkjet printing the ophthalmic device thanks to the inkjet printer 2b.

In an alternative embodiment, a step of determining the manufacturing file representative of the selected groups of adjacent nozzles to be used for inkjet printing each layer of the ophthalmic device can be carried out by the command and control unit 3b on the client-side 11b.

In another alternative embodiment, the inkjet printer 2b can be located on the supplier-side 11a so that the command and control unit 3a on the supplier-side 11a is further configured to inkjet print the ophthalmic device.

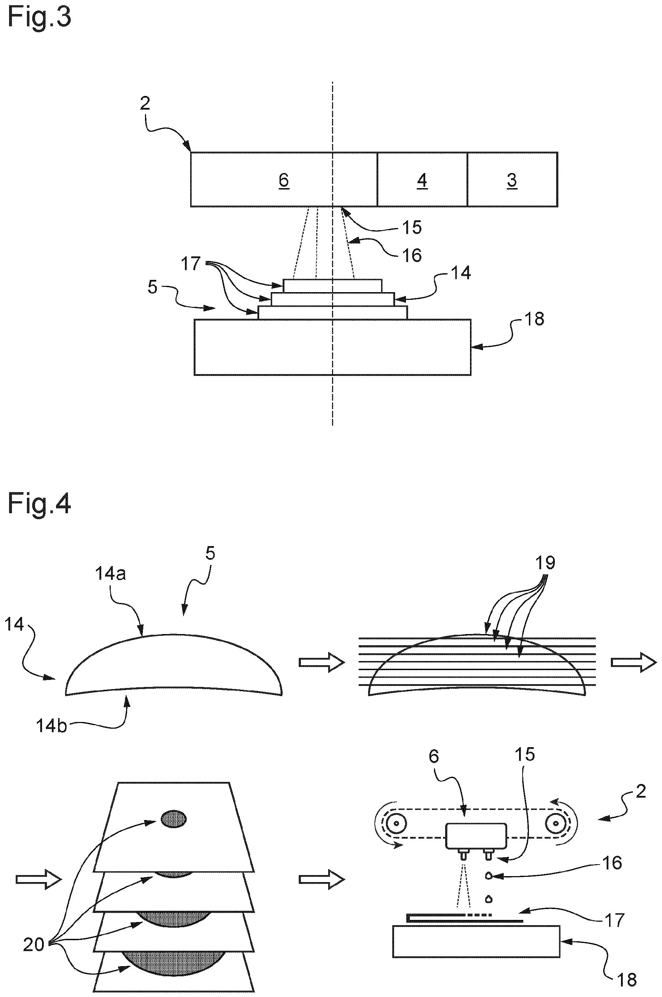

Figure 3 illustrates schematically the inkjet printer 2 which carries out the method for additively manufacturing the ophthalmic device 5 formed by layers 17 and delimited by an external surface 14.

The inkjet print heads 6 of the inkjet printer 2 have each a plurality of nozzles 15 from which the predetermined material is projected in jets of droplets 16, or stream, to form the layers 17 of the ophthalmic device 5, which are then cured by the curing device 4.

A jet of droplets, or stream, includes droplets which can be considered as being a volume of at least one material devoid of tail or satellite, whether such tail or satellite actually happens.

Each print head 6 has a predetermined number of nozzle(s) 15 and a predetermined arrangement thereof. The nozzles 15 can be activated or deactivated.

For instance, each inkjet print head 6 may comprise nozzles 15 arranged in juxtaposed rows thus defining a predetermined length and a predetermined width.

In an embodiment, the inkjet printer 2 comprises three inkjet print heads 6 having each between three and five rows of a number of nozzles comprised between 200 and 350 and successively arranged longitudinally.

Each print head 6 may thus have about 1 000 nozzles +/- 200 nozzles, and the inkjet printer 2 may thus have about 3000 nozzles +/- 600 nozzles.

In variants, to which the disclosure applies, there is only one inkjet print head 6, or more than three print heads; and the print heads can be similar or different and can comprise less than 800 nozzles or in contrast more than 1 200 nozzles.

The command and control unit 3 may also be configured to command and control the inkjet print heads 6 and in particular, a print head resolution corresponding to a radial resolution of the inkjet print heads 6 which is defined at least as a function of the number and the arrangement of the nozzles 15.

The command and control unit 3 may be configured to command and control activation and/or deactivation of each nozzle 15 and also each nozzle firing frequency if any.

The nozzle firing frequency can be variable or fixed.

The nozzle firing frequency may depend at least on geometrical characteristics of the ophthalmic device 5 to be manufactured and/or on the location, including for instance tilting and radial shifting relative to a manufacturing axis MA, of the inkjet print heads 6.

The inkjet printer 2 is here located on an upper side of a support member 18 and is configured to build successively the superimposed layers 17 on the support member 18.

The command and control unit 3 may be configured to locate the inkjet print heads 6 at a distance value selected among a plurality of distance values from the support member 18.

The distance value is comprised between a minimum height according to which the predetermined material is able to forms droplets and a maximum height according to which the droplets of predetermined material are deposited accurately on the support member 18.

The support member 18 can be able to rotate around a rotation axis corresponding to the manufacturing axis MA and the inkjet print heads 6 and the support member 18 can be able to be inclined one relative to each other and/or the inkjet print heads 6 can be able to be inclined relative to the manufacturing axis MA.

In this respect, the command and control unit 3 may also be configured to command and control a tilt angle of the inkjet print heads 6 and the support member 18 one relative to each other, and a rotation speed of the support member 18 around the manufacturing axis MA, if any.

In addition, the command and control unit 3 may be configured to command and control a print resolution of the inkjet print heads 6, which comprises a process resolution corresponding to an angular resolution which is defined at least as a function of nozzles firing frequency, and the print head resolution as defined above.

As stated above, the inkjet printer 2 is configured to perform inkjet printing of the layers 17 thanks to parameters from the manufacturing file, thus defining a so-called sliced ophthalmic device 5.

The parameters of the manufacturing file may comprise a plurality of images each representative of a voxel distribution, or of a droplet distribution, that is to say a distribution of material, each layer 17 corresponding to one or several images.

Figure 4 shows schematically slicing of the ophthalmic device 5 to be manufactured.

In particular, the ophthalmic device 5 has its external surface 14 which is defined by a first face 14a, also-called front face which is here convex, and a second face 14b, also-called back face which is here concave and opposite to the first face 14a.

The ophthalmic device 5 is at least partly divided into slices 19 from the second face 14b to the first face 14a.

In the case the ophthalmic device 5 is entirely built by inkjet printing, the slices 19 form the entire ophthalmic device 5.

In an alternative, the ophthalmic device 5 is divided into slices 19 for at least a part between the second face 14b to the first face 14a, in particular in the case where only a part of the ophthalmic device 5 is built by inkjet printing (also called build over technology),

The slices 19 are representative of the images 20 which are representative of the layers 17 to be built by the inkjet printer 2.

In particular, each slice 19 may comprise one or several images 20, each representative of a material distribution, that is to say the voxel distribution or the droplets distribution, to be ejected in jets of droplets 16 by the selected nozzles 15 of the inkjet print heads 6 toward the support member 18.

Indeed, each image 20 is used for activating and deactivating at least a selected group of adjacent nozzles 15 of the inkjet print heads 6.

It is to be noted that the images 20 can be determined thanks to at least one mathematical function such as linear, power, polynomial, exponential, logarithmic, sinusoidal, etc., used alone or in combination.

Each layer 17 can thus be defined by one or a plurality of images 20, depending on the geometrical characteristics of the layer 17 as such and/or on print properties and/or on the print resolution and/or on the process resolution defined above.

The print properties may comprise an ink material and/or a drop density and/or a drop volume and/or a drop viscosity and/or a drop speed ejection.

Figure 5 is a block diagram showing the main steps of the method 100 for additively manufacturing the ophthalmic device, the method 100 being carried out thanks to the manufacturing system 1 as described above.

The method 100 comprises a step of generating and/or providing 101 the manufacturing file representative of the operational parameters.

The manufacturing file may comprise geometrical characteristics of the slices 19 of the ophthalmic device 5 which are representative of the layers 17 to be built.

The manufacturing file may comprise parameters including the plurality of images 20, each image 20 being representative of the distribution of voxels or the distribution of droplets for inkjet printing the layers 17 and each image 20 being used for activating and deactivating selected nozzles 15 of the inkjet print heads 6.

For at least some images 20, some nozzles 15, in particular at least one group of adjacent nozzles, are selected depending on determined deviation characteristics of the nozzles 15.

In this respect, the manufacturing file may or may not comprise the deviation characteristics data of the nozzles 15 of the inkjet print heads 6, depending if the manufacturing file is provided or generated at this step.

The manufacturing file may comprise parameters including positioning data of the ophthalmic device 5 and/or of the inkjet print heads 6, which are determined depending on the selected nozzles 15.

The manufacturing file may also comprise parameters including curing characteristics.

It is to be noted that the manufacturing file may comprise several sub-files including one or several of the above-mentioned parameters and data.

The method 100 may further comprises a step of positioning 102 the ophthalmic device 5, thanks to the support member 18, and/or the inkjet print heads 6, one relative to the other and also in relation to the manufacturing axis MA, based on dedicated parameters in the generated and/or provided manufacturing file.

The method 100 further comprises a step of inkjet printing 103 the layers 17 of the ophthalmic device 5 on the support member 18, based on dedicated parameters in the generated and/or provided manufacturing file.

The step 103 of inkjet printing the layers 17 may comprise sub-steps of inkjet printing, performed at least partially simultaneously and/or at least partially successively, for instance to make sub-layers at least partially juxtaposed and/or at least partially superimposed.

In addition, the step 103 of inkjet printing the layers 17 may be performed with print properties, similar to each other, or different.

The print properties can be fixed or variable during inkjet printing.

The method 100 further comprises a step of curing 104 at least partially the layers 17 of the ophthalmic device 5 based on dedicated parameters in the generated and/or provided manufacturing file.

It is to be noted that the curing step may be done only when the whole layer is inkjet printed, or after each sub-layers if any, of after a partial deposition of a sub-layer. Of course, the curing applied to a sub-layer may render this sub-layer integrated to the underneath sub-layers, thus forming a layer as such.

At least some steps of the method 100 can be performed iteratively. For instance, the position of the support member 18 and/or of the inkjet print heads 6 can change, and/or the curing can be performed after each layer 17 built or after several layers or sub-layers, etc.

Figures 6 to 11 describe further steps for generating the manufacturing file according to step 101.

According to Figure 6, the method may comprise a step of determining and/or providing 111 the deviation characteristics data of the nozzles 15 of the inkjet print heads 6.

For instance, the deviation characteristics data can be determined by inkjet printing layers 17 according to a predetermined pattern on a calibration blank (not represented), and by measuring the printed pattern on the calibration blank and by comparing the measured printed pattern to the predetermined pattern.

The predetermined pattern may have a shape allowing to highlight one of a deviation direction rather than another deviation direction.

For instance, it can be useful to focus on the deviation direction which is parallel to the length of the inkjet print head rather than the deviation direction which is parallel to the width of the inkjet print head, or inversely.

The above deviation direction is representative for instance of some droplets of one nozzle which may overlap over a droplet from another adjacent nozzle.

For instance, Figure 7 shows graphically such geometrical, or lateral, deviation characteristics data 25 of the nozzles 15 measured in accordance to step 111.

The geometrical deviation characteristics is given here in µm relative to a reference noted 0 and for a number of nozzles 15, here for instance around 500 nozzles, in one direction named X axis, which in this example corresponds to the direction parallel to the length of the inkjet print head.

A similar graph could be obtained for the geometrical deviation characteristics in another direction named Y axis corresponding to the direction parallel to the width of the inkjet print head.

In addition, such graph shows the geometrical deviation characteristics of the nozzles along the X axis, for each row of nozzles of the inkjet print head, or for all the rows of nozzles of the inkjet print head, depending on the accuracy which is needed for the selection of the group of adjacent nozzles 15.

In variant, the deviation characteristics data can be determined by measurement and calculation without predetermined pattern.

It is to be noted that the deviation characteristics may focus also on a volume deviation representative for instance of some excess of material or inversely some lack of material which is deposited.

A similar graph could thus be obtained including volume deviation characteristics rather than geometrical deviation characteristics.

According to Figure 6, the method further comprises a step of generating and/or providing 112 at least one accuracy map 30 representative of the deviation characteristics of the nozzles 15 of the inkjet print heads 6, as a function of the determined deviation characteristics data 25 and of locations of the nozzles 15 on the inkjet print heads 6.

Step 112 can be made after step 111, for instance when the deviation characteristics data are determined thanks to a predetermined pattern, or in parallel of step 111, for when the deviation characteristics data are determined without predetermined pattern.

What is important is that after steps 111 and 112, the accuracy map 30 representative of the deviation characteristics of the nozzles 15 of the inkjet print heads 6 is obtained.

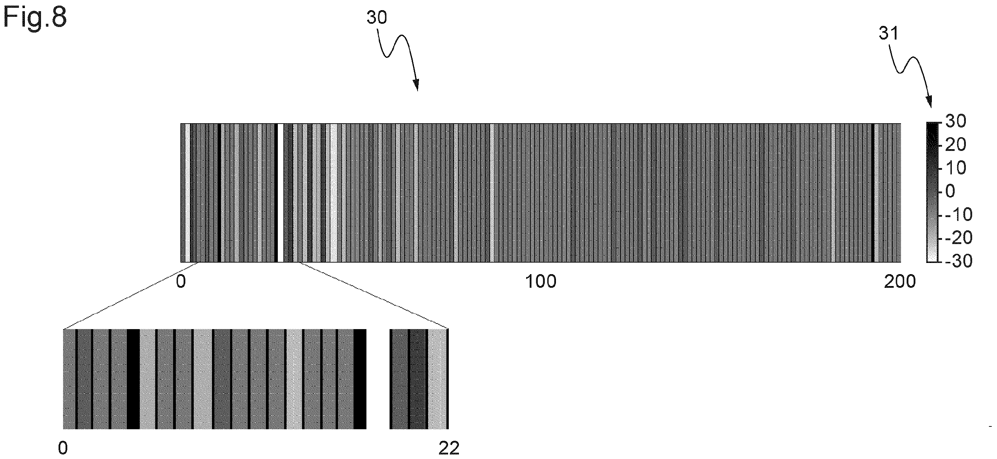

For instance, Figure 8 partially shows such accuracy map 30 representative of geometrical and/or volume deviation characteristics of the nozzles 15, and a detail of the accuracy map 30.

Of course, the method according to the disclosure can be carried out on the basis of a "full" accuracy map, that is to say for all the nozzles of the inkjet print heads of the inkjet printer.

Figure 8 further shows a reading scale 31 corresponding for instance to the volume distribution level of deposited material resulting from the deviation characteristics of the nozzles 15.

The above shows that the method according to the disclosure may combine data from geometrical deviation characteristics and data from volume deviation characteristics of the nozzles 15.

It is to be noted that data from geometrical deviation characteristics relate directly to the geometrical deviation of the nozzles, while data from volume deviation characteristics may be generated by either geometrical deviation of the nozzles or by volume deviation of the nozzles, or both of them.

The detail of the accuracy map 30 on Figure 8 shows that adjacent nozzles may have similar or different deviation characteristics.

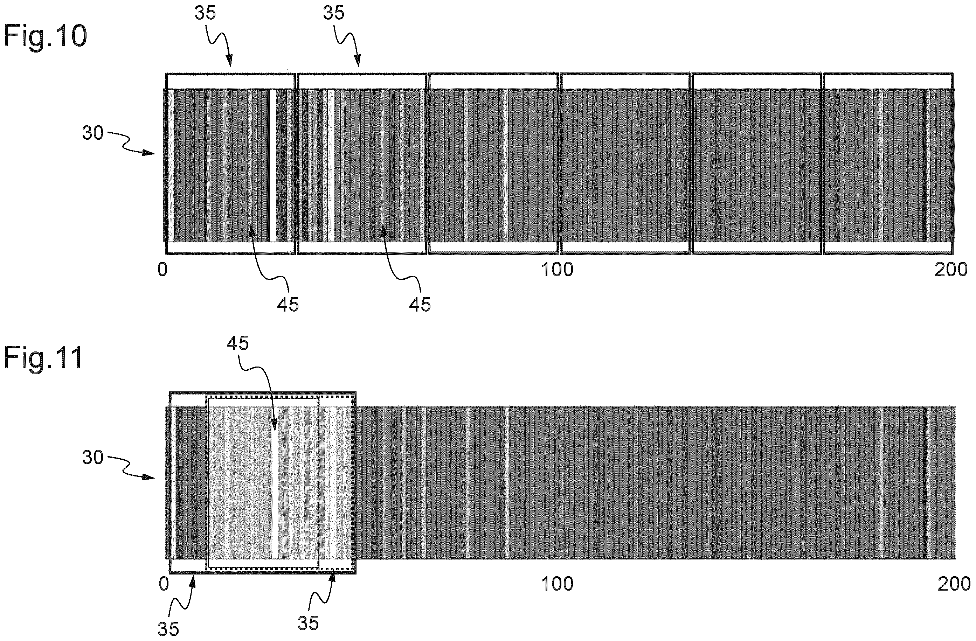

The accuracy map 30 thus comprises a plurality of operating zones corresponding to selected group of adjacent nozzles 15 which may have different deviation characteristics (see in detail on Figure 10 and 11).

According to Figure 6, the method further comprises a step of determining 113 for each of at least some images 20, at least an inkjet printing window 35 representative at least of a size 40 of an active part of the image 20, the active part corresponding to the locations where material has to be deposited.

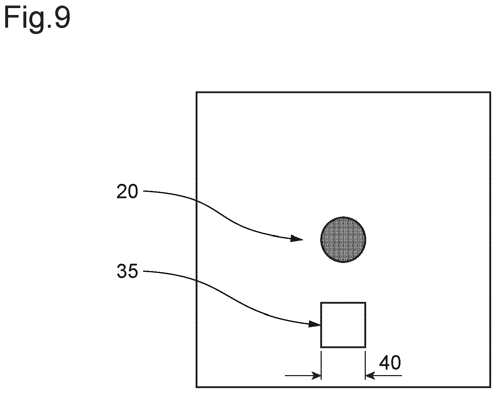

For instance, Figure 9 shows graphically one inkjet printing window 35 determined thanks to the size 40 of one image 20 to be printed for a layer.

According to Figure 6, the method further comprises a step of determining 114, thanks to the at least one inkjet printing window 35, one or several operating zones 45 on the generated accuracy map 30, as a function of the size 40 of the image 20 and the deviation characteristics data 25 of the nozzles 15 on the respective operating zones 45.

For instance, Figures 10 and 11 show graphically the accuracy map 30 on which are illustrated several determined inkjet printing windows 35 located on several operating zones 45, without overlap (Figure 10) and with overlap (Figure 11).

Depending on the size of the image 20 and/or on the deviation characteristics data 25 of the nozzles 15, one or several inkjet printing windows 35 can be determined for the image.

The inkjet printing windows 35 can thus be compared to several operating zones 45 of the generated accuracy map 30 which are distinct or which overlap.

In different embodiments, the size 40 of the image 20 and thus the inkjet printing window 35 are configured so that a single operating zone 45 on the generated accuracy map 30 is determined and selected; or are configured so that several operating zones 45 on the generated accuracy map 30 are determined and selected.

It is reminded that each operating zone 45 corresponds to a group of adjacent nozzles of the inkjet print head.

As stated above, the determined and selected operating zones 45 can at least partially overlap and the overlap may be at least equal to the print head resolution corresponding to the radial resolution of the inkjet print heads 6 which is defined at least as a function of the number and the arrangement of the nozzles 15.

In this respect, determining the operating zone(s) 45 can be made iteratively on several zones of the accuracy map 30.

The operating zones 45 are selected by having the dimensions of a minimum size required for the printing window 35 and by identifying within the accuracy map 30 an operating zone 45 of such dimension and being in line for instance with a quality parameter.

In particular, the group of adjacent nozzles of the operating zones 45 used for inkjet printing the images and thus the layers, are selected also as a function of a quality parameter.

The quality parameter can be defined by at least one of a maximum deviation value for a nozzle, a maximum mean deviation value between some nozzles in a group of nozzles, and a standard deviation value.

In other words, the at least one operating zone 45 on the accuracy map 35 corresponding to the selected group of adjacent nozzles 15 of the inkjet print heads 6 to be used for inkjet printing the layer 17 of the ophthalmic device 5 is determined so that to have a favourable quality parameter in order to obtain the most accurate inkjet printing, in view of the status of the inkjet print heads 6.

According to Figure 6, the method further comprises a step of selecting 115 the group of adjacent nozzles 15 in one or several selected operating zones 45 to be used for inkjet printing 103 the images 20, depending on the operating zone(s) 45 determined and selected, and thus as a function of the deviation characteristics data 25 and of the determined inkjet printing windows 35.

The selected nozzles 15 in the determined operating zone(s) 45 correspond to dedicated nozzles 15 of the inkjet print heads 6. In other words, all the nozzles of the operating zone can be selected or only a part of them which are adjacent.

The selected group of adjacent nozzles 15 are thus used to inkjet print the image 20 to obtain at least one layer 17 and/or sub-layers.

It is to be noted that the layers 17 and/or sub-layers of the ophthalmic device 5 can be at least partially inkjet printed simultaneously thanks to different selected nozzles 15 and/or at least partially successively one to each other thanks to similar or different selected nozzles 15.

It is to be noted also that the determined deviation characteristics of the nozzles 15 are representative of the accuracy of the nozzles 15 to eject droplets at targeted locations and/or with targeted volumes, so that the selection of the nozzles 15 is made by taking into account accuracy of both selected nozzles 51 themselves and no-selected nozzles 15 of the same inkjet print head and/or of the other inkjet print heads.

Therefore, thanks to the method according to the disclosure, it is possible to take into account a quality of ejection of the nozzles 15 and to control accurately the inkjet printing depending on a status of performance of the nozzles 15 of the inkjet print heads 6, including the selected nozzles 15 and the no-selected nozzles 15.

Indeed, the inventors found that clogging and declogging of the nozzles 15 of the inkjet print heads 6, which can generate dispersion of the droplets and thus inaccuracy, do not vary substantially during inkjet printing, so that the selection of the nozzles 15 as proposed in the present method can be performed before and/or during inkjet printing.

Therefore, the method according to the disclosure may allow to make a mapping characterization of the inkjet print heads and to use it in order to optimize and improve the printing quality.

The method thus allows to provide, thanks to the technology of 3D-inkjet printing, an ophthalmic device 5 having a determined geometry and with no visible printing lines and surface waviness or with reduced printing lines and surface waviness on its external surface 14 which are not detrimental for the quality of the ophthalmic device 5.

It should be noted more generally that the disclosure is not limited to the examples described and represented.

## Claims

1. Method for additively manufacturing an ophthalmic device (5) thanks to at least one inkjet print head (6) having a plurality of nozzles (15), comprising providing (101) a manufacturing file comprising parameters including a plurality of images (20), each image being representative of a distribution of voxels or droplets for inkjet printing at least partially a layer (17) of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window (35).

2. Method according to claim 1, comprising providing (111) deviation characteristics data (25) of the nozzles (15) of the at least one inkjet print head (6), determining (113) for each of at least some images (20) at least one inkjet printing window (35) representative at least of a size (40) of the image, and selecting (115) the group of adjacent nozzles to be used for inkjet printing each of said at least some images as a function of the deviation characteristics data and of the at least one determined inkjet printing window.

3. Method according to one of claims 1 and 2, wherein the group of adjacent nozzles to be used for inkjet printing each of said at least some images is selected also as a function of a quality parameter defined by at least one of a maximum deviation value for a nozzle, a maximum mean deviation value between some nozzles in a group of nozzles, and a standard deviation value.

4. Method according to any one of claims 1 to 3, comprising providing (112) at least one accuracy map (30) representative of the deviation characteristics of the nozzles (15) of the at least one inkjet print head (6), as a function of deviation characteristics data (25) and of locations of the nozzles (15) on the inkjet print head (6).

5. Method according to claim 4, comprising determining (114) at least one operating zone (45) on the generated accuracy map (30) corresponding to the selected nozzles (15) of the at least one inkjet print head (6), thanks to the at least one inkjet printing window (35).

6. Method according to claim 5, wherein the at least one operating zone (45) is determined as a function of the size (40) of the image (20) and the deviation characteristics data (25) of the nozzles (15) on the at least one operating zone.

7. Method according to claim 6, wherein depending on the size (40) of the image (20) and/or on the deviation characteristics data (25) of the nozzles (15), one or several inkjet printing windows (35) are determined for the image and are placed on several operating zones of the generated accuracy map (30) which are distinct, or which are similar, or which overlap.

8. Method according to any one of claims 1 to 7, comprising determining (111) deviation characteristics data (25) of the nozzles (15) of the at least one inkjet print head (6) by inkjet printing layers (17) according to a predetermined pattern on a calibration blank, by measuring the printed pattern on the calibration blank and by comparing the measured printed pattern to the predetermined pattern.

9. Method according to claim 8, wherein the predetermined pattern has a shape allowing to highlight one of a deviation direction rather than another deviation direction.

10. Method according to any one of claims 1 to 9, comprising inkjet printing (104) the layers (17) of the ophthalmic device (5) based on the manufacturing file.

11. Method according to any one of claims 1 to 10, wherein the manufacturing file comprises parameters further including positioning data of the ophthalmic device (5) and/or of the at least one inkjet print head (6), which are determined depending on the selected nozzles (15).

12. A command and control unit including system elements configured to run a computer program in order to additively manufacture an ophthalmic device (5) thanks to at least one inkjet print head (6) having a plurality of nozzles (15), by providing a manufacturing file comprising parameters including a plurality of images (20), each image being representative of a distribution of voxels or droplets for inkjet printing at least partially a layer (17) of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window (35).

13. A manufacturing system comprising an inkjet printer (2) comprising at least one inkjet print head (6) having a plurality of nozzles (15) and a command and control unit (3), the system (1) being configured for additively manufacturing an ophthalmic device (5), by providing to the inkjet printer a manufacturing file comprising parameters including a plurality of images (20), each image being representative of a distribution of voxels or droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window (35).

14. A computer program including instructions configured to additively manufacture an ophthalmic device (5) thanks to at least one inkjet print head (6) having a plurality of nozzles (15), by determining a manufacturing file comprising parameters including a plurality of images (20), each image being representative of a distribution of voxels or droplets for inkjet printing at least partially a layer of the ophthalmic device and each image being used for activating and deactivating nozzles of the at least one inkjet print head, wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window (35), when said computer program is run by a computer.

15. A client-server communication interface for transferring to a remote computer at least a manufacturing file for additively manufacturing an ophthalmic device (5), the manufacturing file being determined by a computer program when said computer program is run in a command and control unit (3a, 3b) and comprising parameters including a plurality of images (20), each image being representative of a distribution of voxels or droplets for inkjet printing at least partially a layer of the ophthalmic device and each image being used for activating and deactivating nozzles (15) of at least one inkjet print head (6) of an inkjet printer (2), wherein for at least some images, some nozzles of the at least one inkjet print head are selected depending on determined deviation characteristics of the nozzles of the at least one inkjet print head, the selected nozzles being representative of a group of adjacent nozzles located in an inkjet printing window (35), the remote computer being configured to implement the manufacturing file by inkjet printing the layers of the ophthalmic device.
